# EUROPÄISCHE PATENTANMELDUNG

(11) **EP 4 778 859 A1**
(43) Veröffentlichungstag der Anmeldung: **22.07.2026**
(21) Anmeldenummer: 25153055.6
(22) Anmeldetag: 21.01.2025
(51) Int. Cl.: B65G 17/20, B65G 47/96

(54) **SORTIERSYSTEM FÜR EIN LOGISTIKZENTRUM UND EIN ENTSPRECHENDES VERFAHREN**

(71) Anmelder: BEUMER Group GmbH & Co. KG, 59269 Beckum (DE)
(72) Erfinder: JESPER, Jan Josef, 33129 Delbrück (DE); MEYER, Marion, 33803 Steinhagen (Westfalen) (DE); NEUMANN, Nils, 58089 Hagen (DE); HOPMANN, Tobias, 48164 Münster (DE); STAUN, Jorgen, 8382 Hinnerup (DK)
(74) Vertreter: Angerhausen, Christoph

(57) **Zusammenfassung**

Die Erfindung betrifft ein Sortiersystem für ein Logistikzentrum,
welches ein Förderstreck und eine Vielzahl von Fahrwägen aufweist,
wobei jeder Fahrwagen einen eigenen Antrieb aufweist, mit welchem der Fahrwagen individuell auf der gesamten Förderstrecke bewegbar ist, wobei an den Fahrwägen jeweils ein Lastaufnahmemittel zur Aufnahme und Transport von Paketen befestigt ist und wobei die Lastaufnahmemittel aus mindestens zwei unterschiedlichen Lastaufnahmemittelformen ausgewählt sind. Die Erfindung betrifft ferner ein entsprechendes Sortierverfahren.

## Beschreibung

Die vorliegende Offenbarung bezieht sich auf ein System und ein Verfahren für die Sortierung und den Transport von Paketen in einem Logistikzentrum. Insbesondere bezieht sich die vorliegende Offenbarung auf ein Sortiersystem mit individuell angetriebenen Fahrwägen, die mit unterschiedlichen Lastaufnahmemitteln ausgestattet sind, sowie auf ein Verfahren zur Identifizierung und Nutzung geeigneter Lastaufnahmemittel basierend auf den Eigenschaften der zu transportierenden Pakete.

Auf dem Gebiet der Logistik und des Pakettransports ist es üblich, dass Pakete über Förderbänder und Sortiersysteme zu ihren jeweiligen Zielen transportiert werden. Bekannte Systeme umfassen typischerweise eine Vielzahl von Förderbändern, die miteinander verbunden sind und Pakete von einem Punkt zum anderen bewegen. Diese Systeme verwenden oft zentrale Antriebe, die die Bewegung der Förderbänder steuern, und die Pakete werden auf standardisierten Lastaufnahmemitteln transportiert, die für eine Vielzahl von Pakettypen geeignet sind. Die Lastaufnahmemittel sind jedoch oft nicht flexibel genug, um unterschiedliche Paketgrößen und -formen effizient zu handhaben, was zu Ineffizienzen und möglichen Beschädigungen der Pakete führen kann. Insbesondere eignen sich die Lastaufnahmemittel gattungsgemäßer Systeme nicht für einen Transport von sogenannten "nicht förderfähigen" Paketen, da diese Lastaufnahmemittel meist auf Kartons und Tüten abgestimmt sind. Runde und zylindrische Pakete lassen sich hiermit meist nicht befördern und sortieren, weil diese Pakete in Kurven der Förderstrecke aufgrund von Fliehkräften von den Lastaufnahmemitteln fallen.

Gemäß bekannter Sortiersysteme werden Pakete oft in einer festen Reihenfolge auf die Förderbänder geladen und durchlaufen eine vorbestimmte Route, bis sie ihr Ziel erreichen. Diese Systeme sind in ihrer Struktur und Funktionalität starr und bieten wenig Flexibilität, um auf Veränderungen in der Paketgröße, -form oder -gewicht zu reagieren. Darüber hinaus erfordern sie häufig manuelle Eingriffe, um Pakete zu sortieren oder zu handhaben, was den Prozess verlangsamt und die Betriebskosten erhöht. Trotz der beträchtlichen Fortschritte auf dem Gebiet der Logistik und des Pakettransports besteht nach wie vor ein Bedarf an Systemen, die eine höhere Flexibilität und Effizienz bieten, insbesondere in Bezug auf die Handhabung und den Transport von Paketen unterschiedlicher Größen und Formen.

Ein weiteres Problem bei bestehenden Sortiersystemen ist die begrenzte Modularität und Anpassungsfähigkeit. Viele Systeme sind fest installiert und erfordern erhebliche Investitionen und Zeit für Änderungen oder Erweiterungen. Dies kann besonders problematisch sein, wenn Logistikzentren auf saisonale Schwankungen oder unerwartete Anstiege im Paketvolumen reagieren müssen. Die mangelnde Modularität führt auch dazu, dass bestehende Systeme nicht leicht an neue Technologien oder verbesserte Prozesse angepasst werden können, was die langfristige Effizienz und Wettbewerbsfähigkeit beeinträchtigt.

Es ist daher ein der vorliegenden Erfindung zugrunde liegendes technisches Problem, ein Sortiersystem bereitzustellen, das die Nachteile bekannter Systeme überwindet.

Ein Sortiersystem, welches dieses technische Problem löst, ist Gegenstand des Anspruchs 1. Ansprüche 2 bis 14 betreffen jeweils vorteilhafte Ausführungsformen des Systems. Anspruch 15 beschreibt ein Sortierverfahren für den Transport eines Pakets in einem Logistikzentrum.

Erfindungsgemäß weist das Sortiersystem für ein Logistikzentrum eine Förderstrecke und eine Vielzahl von Fahrwägen auf. Jeder Fahrwagen ist mit einem eigenen Antrieb ausgestattet, der es ermöglicht, dass jeder Fahrwagen individuell auf der gesamten Förderstrecke bewegbar ist. Dies bedeutet, dass die Fahrwagen unabhängig voneinander operieren können, was eine flexible und effiziente Sortierung der Pakete ermöglicht. Insbesondere kann hierdurch jeder Fahrwagen losgelöst von den Bewegungen aller anderen Fahrwagen des Sortiersystems entlang einer beliebigen Route auf der Förderstrecke bewegt werden. An dem Fahrwagen ist ein Lastaufnahmemittel zur Aufnahme und zum Transport von Paketen befestigt. Diese Lastaufnahmemittel sind aus mindestens zwei unterschiedlichen Lastaufnahmemittelformen ausgewählt. Im Kontext der Erfindung bedeutet dies, dass zumindest eines der auf den Fahrwägen befestigten Lastaufnahmemitteln anders als die Lastaufnahmemittel der anderen Fahrwägen ausgebildet ist. Hierbei kann sich die Lastaufnahmemittelform in Bezug auf die Lastaufnahmemittelart und/oder die Abmessungen des Lastaufnahmemittels unterscheiden. Dies erlaubt dem System, Pakete unterschiedlicher Größen und Formen effizient zu handhaben. Ein Vorteil dieser Anordnung ist die erhöhte Anpassungsfähigkeit und Effizienz des Sortierprozesses, da die Fahrwägen und ihre Lastaufnahmemittel optimal auf die spezifischen Anforderungen der zu transportierenden Pakete und an die Sortierziele der Pakete abgestimmt werden können. Anstelle eine Vorsortierung vorzunehmen und hierauf basierend nach Größe, Gewicht und Art der Pakete diese auf geeignete Sortiersysteme aufzuteilen, können alle Pakete in das erfindungsgemäße Sortiersystem eingespeist werden. Ein Paket im Sinne der Erfindung kann ein konventionelles Paket in einem Karton oder einer anderen Verpackung, einer Briefsendung, eine Retour, eine Polybag, oder Ähnliches sein.

Die Fahrwägen können einen modularen Aufbau aufweisen, wobei alle Fahrwägen identisch ausgebildet sind und sich lediglich die an den Fahrwägen befestigten Lastaufnahmemittel unterscheiden. Dies bedeutet, dass die Grundstruktur und auch der Antrieb der Fahrwagen einheitlich gestaltet sind. Der modulare Aufbau der Fahrwagen ermöglicht eine flexible und kostengünstige Anpassung an unterschiedliche Transportanforderungen, da verschiedene Lastaufnahmemittel an den identischen Fahrwägen befestigt werden können. Da diese Lastaufnahmemittel jeweils für unterschiedliche Paketgrößen und -formen optimiert sind, können bei saisonalen oder gar täglichen Schwankungen beim Aufkommen eines besonderen Typs von Paketen die Fahrwägen flexibel mit entsprechend optimalen Lastaufnahmemitteln versehen werden. Hierdurch kann die Effizienz des Sortiersystems auch dann gewahrt werden, wenn sich die Zusammensetzung der Pakettypen, welche durch das Logistikzentrum verarbeitet werden, schwankt oder schnell verändert.

Der Fahrwagen kann in Bezug auf eine Ebene parallel zur Transportrichtung auf der Förderstrecke symmetrisch ausgeführt sein. Der Fahrwagen kann eine erste Montagefläche und eine zweite Montagefläche zur Befestigung eines Lastaufnahmemittels aufweisen. Die erste Montagefläche und/oder zweite Montagefläche können horizontal oder vertikal ausgebildet sein. Die erste Montagefläche und/oder zweite Montagefläche können über eine vertikale Grundstruktur verbunden sein. Die erste Montagefläche und/oder zweite Montagefläche und/oder vertikale Grundstruktur können einen Vorsprung aufweisen, der dazu ausgebildet ist, in eine Führungsnut der Förderstrecke einzugreifen oder sie zu hintergreifen.

Eine Lastaufnahmemittelform kann ein Lastaufnahmemittel für den stehenden Transport von Paketen sein. Die Wahl dieser spezifischen Lastaufnahmemittelformen bringt mehrere Vorteile, insbesondere für große Pakete, mit sich. Vorzugsweise kann ein Lastaufnahmemittel für den stehenden Transport eine Crossbelt-Einheit, eine Schale, eine Kippschale oder ein Container sein. Die Verwendung von Crossbelt-Einheiten ermöglicht eine präzise und kontrollierte Bewegung der Pakete, was die Sortiergenauigkeit erhöht und das Risiko von Beschädigungen während des Transports minimiert. Schalen und Kippschalen hingegen bieten den Vorteil, dass sie Pakete sicher halten und bei Bedarf kippen können, um den Entladevorgang zu erleichtern. Container als Lastaufnahmemittel bieten eine geschlossene Umgebung für den Transport, was besonders vorteilhaft ist, wenn es um den Schutz von empfindlichen oder wertvollen Gütern geht oder wenn "nicht förderfähigen" Pakete transportiert und sortiert werden, die rund, zylindrisch oder anderweitig abweichend von einer kubischen oder flachen Form geformt sind.

Eine Lastaufnahmemittelform kann ein Lastaufnahmemittel für den hängenden Transport von Paketen sein. Insbesondere kann eine Lastaufnahmemittelform für den hängenden Transport eine Transporttasche sein. Diese Lastaufnahmemittelform ermöglicht es, Pakete sicher und effizient in einer hängenden Position zu transportieren, was insbesondere für empfindliche oder unregelmäßig geformte Pakete von Vorteil ist. Insbesondere kann eine Lastaufnahmemittelform eine Transporttasche sein. Die Transporttasche bietet eine flexible und schützende Umgebung für die Pakete, wodurch das Risiko von Beschädigungen während des Transports minimiert wird. Zudem kann die hängende Transportmethode den verfügbaren Raum innerhalb des Sortiersystems optimal ausnutzen, da die Pakete vertikal angeordnet werden können, was zu einer besseren Raumnutzung und einer höheren Kapazität führt. Die Transporttasche kann eine Bodenklappe aufweisen, zum schwerkraftgetriebenen Ausgeben eines in der Transporttasche transportierten Pakets. Die Transporttasche kann ferner einen mechanischen oder elektromechanischen Auslösemechanismus aufweisen, welcher durch eine Endstelle oder durch den Fahrwagen ausgelöst werden kann. Eine Transporttasche kann wahlweise als große Transportasche oder als kleine Transporttasche ausgebildet sein, wobei die große Transportasche vorzugsweise für den Transport von konventionellen Paketen und die kleine Transporttasche für den Transport von Briefsendungen ausgebildet ist. Auf diese Weise sind große Transporttaschen und kleine Transporttaschen simultan im selben Sortiersystem transportierbar. Weitere Lastaufnahmemittelformen können ein Haken, ein Greifer, Hebebänder oder Hängegurte sein.

Des Weiteren können sich die Lastaufnahmemittelformen ebenfalls in Bezug auf ihre Größe und/oder Breite und Traglast unterscheiden. So kann beispielsweise ein erstes und ein zweites Lastaufnahmemittel als Crossbelt-Einheit ausgeführt sein, das erste Lastaufnahmemittel jedoch deutlich breiter und/oder länger als das zweite Lastaufnahmemittel sein.

An zumindest einem Fahrwagen kann ein zweites Lastaufnahmemittel befestigt sein. Das Lastaufnahmemittel ist vorzugsweise ein Lastmittel für den stehenden Transport von Paketen, während das zweite Lastaufnahmemittel vorzugsweise ein Lastmittel für den hängenden Transport von Paketen ist. Insbesondere kann das Lastaufnahmemittel eine Crossbelt-Einheit sein und das zweite Lastaufnahmemittel eine Transporttasche. Eine entsprechende Konfiguration des Fahrwagens ermöglicht, die Transportkapazitäten eines einzelnen Fahrwagens zu erhöhen und erlaubt eine effiziente Beförderung, wenn die Sortierziele für das Paket in Lastaufnahmemittel und dem zweiten Lastaufnahmemittel dasselbe oder ähnliche Sortierziele haben.

Der Antrieb kann dazu eingerichtet sein, den Fahrwagen selbst angetrieben auf der Förderstrecke zu bewegen. Dies bedeutet, dass jeder Fahrwagen über ein eigenes Antriebssystem verfügt, welches ihm ermöglicht, unabhängig und autonom auf der Förderstrecke zu navigieren. Insbesondere kann die Kraft für die Beschleunigung des Fahrwagens durch den Antrieb und nicht durch die Förderstrecke generiert werden. Diese Unabhängigkeit der Fahrwägen bietet mehrere Vorteile. Erstens ermöglicht sie eine höhere Flexibilität und Anpassungsfähigkeit des Systems an unterschiedliche Betriebsanforderungen. Die Fahrwägen können individuell und bevorzugt in Echtzeit gesteuert werden, um spezifische Aufgaben zu erfüllen und Einschleusbereiche, Sortierziele und/oder Pufferzonen entlang frei spezifizierbaren Routen anzusteuern. Dies ermöglicht der selbstangetriebene Mechanismus eine dynamische Routenplanung und -anpassung. Die Fahrwägen können auf Basis von Echtzeitdaten ihre Routen optimieren, um Staus zu vermeiden und die schnellste verfügbare Route zu ihrem Ziel zu wählen. Dies führt zu einer Reduzierung der Transportzeiten und einer Erhöhung des Gesamtdurchsatzes des Systems. Ferner erlaubt der selbst angetriebene Antrieb eine bessere Handhabung von Spitzenlasten. Die Fahrwägen können in Pufferzonen zwischengespeichert und bei Bedarf schnell wieder in das System integriert werden, ohne dass eine manuelle Intervention erforderlich ist. Dies verbessert die Reaktionsfähigkeit des Systems auf wechselnde Lastanforderungen. Die Fahrwägen können einen Energiespeicher aufweisen und/oder über die Förderstrecke mit Strom versorgt werden. Der Energiespeicher kann in einem Pufferspeicher geladen oder ausgetauscht werden. Alternativ kann die Förderstrecke Antriebsblöcke, vorzugsweise Linearmotor-Antriebsblöcke, aufweisen, welche dazu eingerichtet sind, mit dem Antrieb zu interagieren, um die Kraft für die Beschleunigung des Fahrwagens zu generieren.

Der Antrieb kann als Linearantrieb oder als Reibungsantrieb ausgeführt sein. Ein Linearantrieb ist ein Mechanismus, der elektromechanisch eine lineare Bewegung entlang der Förderstrecke erzeugt. Diese Art von Antrieb ermöglicht eine präzise und schnelle Bewegung der Fahrwägen entlang der Förderstrecke. Linearantriebe sind bekannt für ihre hohe Effizienz und Genauigkeit, was besonders in einem Sortiersystem von Vorteil ist, da sie eine schnelle und präzise Positionierung der Fahrwägen ermöglichen. Ein Reibungsantrieb hingegen nutzt die Reibung zwischen einer Komponente des Antriebs, beispielsweise ein Reibrad- oder Reibrollengetriebe, und der Förderstrecke, um Bewegung zu erzeugen. Diese Art von Antrieb kann ebenfalls eine präzise Steuerung der Fahrwägen ermöglichen, jedoch mit einem anderen mechanischen Ansatz. Reibungsantriebe sind oft einfacher in der Konstruktion und können kostengünstiger sein, insbesondere da ein elektromechanisches Führungssystem der Förderstrecke entfällt, welches für einen Linearantrieb vonnöten ist.

Der Antrieb kann dazu eingerichtet sein, den Fahrwagen selbst angetrieben auf der Förderstrecke zu bewegen. Dies kann bedeuten, dass jeder Fahrwagen über ein eigenes Antriebssystem verfügt, welches ihm ermöglicht, unabhängig und autonom auf der Förderstrecke zu navigieren. Insbesondere wird die Kraft für die Beschleunigung des Fahrwagens durch den Antrieb und nicht durch die Förderstrecke generiert. Diese Unabhängigkeit der Fahrwägen bietet mehrere Vorteile. Erstens ermöglicht sie eine höhere Flexibilität und Anpassungsfähigkeit des Systems an unterschiedliche Betriebsanforderungen. Die Fahrwägen können individuell und bevorzugt in Echtzeit gesteuert werden, um spezifische Aufgaben zu erfüllen und Einschleusbereiche, Sortierziele und/oder Pufferzonen entlang frei spezifizierbaren Routen anzusteuern. Dies ermöglicht der selbstangetriebene Mechanismus eine dynamische Routenplanung und -anpassung. Die Fahrwägen können auf Basis von Echtzeitdaten ihre Routen optimieren, um Staus zu vermeiden und die schnellste verfügbare Route zu ihrem Ziel zu wählen. Dies führt zu einer Reduzierung der Transportzeiten und einer Erhöhung des Gesamtdurchsatzes des Systems. Ferner erlaubt der selbst angetriebene Antrieb eine bessere Handhabung von Spitzenlasten. Die Fahrwägen können in Pufferzonen zwischengespeichert und bei Bedarf schnell wieder in das System integriert werden, ohne dass eine manuelle Intervention erforderlich ist. Dies verbessert die Reaktionsfähigkeit des Systems auf wechselnde Lastanforderungen. Die Fahrwägen können einen Energiespeicher aufweisen und/oder über die Förderstrecke mit Strom versorgt werden. Der Energiespeicher kann in einem Pufferspeicher geladen oder ausgetauscht werden. Die Schienen können ein Rastermaß aufweisen, wobei eine Länge, Höhe, Breite, Winkelbereich und/oder Krümmungsradius der Schienen einem Standardmaß oder einem Vielfachen Ganzen dieses Standardmaßes entspricht. Dieses Merkmal bringt mehrere Vorteile mit sich, die zur Effizienz und Flexibilität des Sortiersystems beitragen. Das Rastermaß ermöglicht eine standardisierte und vereinfachte Planung und Installation des Schienensystems innerhalb eines Logistikzentrums. Durch die Verwendung von Standardmaßen können die Schienenmodule leicht miteinander kombiniert und erweitert werden, was eine schnelle Anpassung an veränderte betriebliche Anforderungen ermöglicht.

Die Förderstrecke kann Weichen und/oder Zusammenführungen aufweisen. Diese Weichen und Zusammenführungen ermöglichen eine flexible und effiziente Steuerung der Fahrwägen innerhalb des Systems. Weichen dienen dazu, die Züge von einem Schienenabschnitt auf einen anderen zu leiten, wodurch eine dynamische Routenführung ermöglicht wird. Dies ist besonders nützlich, um Engpässe zu vermeiden und die Fahrwägen auf weniger frequentierte Strecken umzuleiten. Zusammenführungen hingegen erlauben es, Fahrwägen von verschiedenen Schienenabschnitten auf einen gemeinsamen Abschnitt zu führen, was die Koordination und Zusammenführung von Paketen aus unterschiedlichen Bereichen des Logistikzentrums erleichtert.

Die Schienen können als Monorail ausgeführt sein. Die Schienen können über Tragprofile an einer Decke des Logistikzentrums montiert sein. Die Schienen können auf freistehende Rahmenkonstruktionen, vorzugsweise auf Portalrahmen, auf einem Boden des Logistikzentrums montierbar sein. Die Schienen können dazu ausgebildet sein, eine Bewegung des Fahrwagens auf einer Oberseite und/oder hängend an einer Unterseite der Schiene zu führen. Die Fahrwägen können dazu ausgebildet sein, in Transportrichtung neben der Schiene bewegbar zu sein. Die Fahrwägen können dazu ausgebildet sein, eine Unterseite und eine Oberseite der Schiene zu umgreifen. Die Schienen können Führungselemente aufweisen, vorzugsweise Führungsnuten, in denen ein Vorsprung des Fahrwagens führbar ist.

Die Förderschrecke kann einen geschlossenen Ring, vorzugsweise eine Vielzahl geschlossener Ringe aufweisen, welche über Weichen und/oder Zusammenführungen miteinander verbunden sind. Diese Konfiguration bietet mehrere Vorteile für den Betrieb des Sortiersystems. Ein geschlossener Ring ermöglicht eine kontinuierliche Bewegung der Fahrwägen, was die Effizienz des Systems erhöht, indem es die Notwendigkeit für Stopps und Starts minimiert. Die Fahrwägen können sich ungehindert entlang der Förderstrecke bewegen, was zu einer gleichmäßigeren Verteilung der Lasten und einer Reduzierung von Engpässen führt. Die Integration von Weichen und Zusammenführungen in das System ermöglicht eine flexible Routenführung der Fahrwägen. Dies bedeutet, dass die Fahrwägen dynamisch auf verschiedene Strecken geleitet werden können, um die effizienteste Route zu ihrem Ziel zu nehmen. Dies ist besonders nützlich in einem Logistikzentrum, wo die Anforderungen an die Sortierung und den Transport von Paketen variieren können. Durch die Möglichkeit, die Fahrwägen über verschiedene Ringe und Strecken zu leiten, kann das System auf Änderungen in der Paketmenge und -art reagieren, ohne dass physische Änderungen an der Förderstrecke erforderlich sind.

Das Sortiersystem kann einen Einschleusbereich aufweisen, in der ein Paket in das Sortiersystem eingespeist werden kann. Das Sortiersystem und insbesondere der Einschleusbereich kann dazu konfiguriert sein, Größe, Form, Art und/oder Gewicht des Pakets automatisch zu erfassen, vorzugsweise mittels einer Sensorvorrichtung, besonders bevorzugt mittels eines Kamerasystems. Die Einführung in einem solchen Einschleusbereich bietet mehrere Vorteile für das Sortiersystem. Erstens ermöglicht sie eine nahtlose Integration der Pakete in den Sortierprozess, indem sie sicherstellt, dass alle relevanten Eigenschaften eines Pakets erfasst werden, bevor es weiter transportiert wird. Dies ist besonders wichtig, um sicherzustellen, dass das richtige Lastaufnahmemittel für den Transport des Pakets ausgewählt wird. Die Fähigkeit, Pakete automatisch zu identifizieren und zu klassifizieren, reduziert die Notwendigkeit manueller Eingriffe und erhöht die Effizienz des Systems erheblich. Alternativ oder zusätzlich kann das Sortiersystem eine Zuförderstrecke aufweisen, welche dazu eingerichtet ist, ein Paket zum Einschleusbereich zu befördern und Größe, Form, Art und/oder Gewicht des Pakets automatisch zu erfassen. Dabei kann das Sortiersystem eine Vielzahl von Einschleusbereichen aufweisen, welche mit der Zuförderstrecke verbunden sind. Die Einschleusbereiche können jeweils für das Bereitstellen und/oder Verladen unterschiedlicher Lastaufnahmemittel bzw. Pakete ausgebildet sein.

Durch die automatische Erfassung der Paketmerkmale kann das System die optimalen Routen und die Fahrwägen für jedes Paket bestimmen, was zu einer schnelleren und effizienteren Sortierung führt. Die Integration eines Kamerasystems als bevorzugte Sensorvorrichtung bietet zusätzliche Vorteile, da es eine detaillierte visuelle Erfassung der Pakete ermöglicht, die über einfache Gewichtsmessungen hinausgeht. Dies kann besonders nützlich sein, um unregelmäßig geformte oder beschädigte Pakete zu identifizieren, die möglicherweise besondere Handhabung mit besonderen Lastaufnahmemitteln erfordern.

Darüber hinaus kann das Sortiersystem eine Pufferzone aufweisen, welche dazu ausgebildet ist, Pakete und/oder Fahrwägen und/oder Lastaufnahmemittel aus der Förderstrecke zu entnehmen, zwischenzuspeichern und wieder in die Förderstrecke einzuspeisen. Die Pufferzone stellt eine wesentliche Komponente dar, um die Effizienz und Flexibilität des Sortiersystems zu erhöhen. Durch die Möglichkeit, Pakete, Fahrwägen und Lastaufnahmemittel temporär aus dem aktiven Förderprozess zu entnehmen und zwischenzuspeichern, kann das System Lastspitzen besser bewältigen und eine kontinuierliche und gleichmäßige Auslastung der Förderstrecke gewährleisten. Insbesondere kann die Pufferzone zur manuellen oder automatischen Montage oder Demontage der Lastaufnahmemittel eingerichtet sein. Hierdurch kann die Pufferzone als Lager für Lastaufnahmemittel fungieren, wodurch bei einem wechselnden Aufkommen von Pakettypen- und Größen Fahrwägen in die Pufferzone bewegt werden können, um die an den Fahrwägen befestigten Lastaufnahmemittel zu tauschen.

Gemäß eines weiteren Aspekts betrifft die Erfindung das Sortierverfahren für den Transport eines Pakets in einem Logistikzentrum und insbesondere ein Sortierverfahren für den Transport eines Pakets in dem oben beschriebenen Sortiersystems.

Das Sortierverfahren umfasst die Schritte;
- Erfassen einer Größe, einer Form, einer Art und/oder eines Gewichts des Pakets in einem Einschleusbereich eines Sortiersystems oder in einer Zuförderstrecke zum Einschleusbereich;
- Basierend auf der erfassten Größe, der Form, der Art und/oder des Gewicht des Pakets, Identifizieren eines für einen Transport des Pakets geeignetes Lastaufnahmemittel aus mindestens zwei unterschiedlichen Lastaufnahmemittelformen;
- Bereitstellen eines Fahrwagens in dem Einschleusbereich, an welchem das für einen Transport des Pakets geeignetes Lastaufnahmemittel befestigt ist;
- Verladen des Pakets in das an dem Fahrwagen befestigte für einen Transport des Pakets geeignetes Lastaufnahmemittel; und
- Transportieren des Fahrwagens mittels eines eigenen Antriebs des Fahrwagens auf einer Förderstrecke des Sortiersystems zu einer Endstelle innerhalb des Sortiersystems.

Dieses Verfahren ermöglicht die effiziente Handhabung von Paketen unterschiedlicher Größen und Formen, wodurch die Flexibilität und Anpassungsfähigkeit der Sortierung in einem Logistikzentrum erhöht wird. Ein geeignetes Lastaufnahmemittel im Sinne der Erfindung ist ein Lastaufnahmemittel, welches in der Lage ist, das Gewicht und die Abmessungen des Pakets zu tragen, an einer Endstelle am Sortierziel des Pakets entladbar ist und die Sicherheit des Pakets und ggf. eines Bedieners der Sortiervorrichtung zu garantieren.

Das Verfahren kann ferner den Schritt des Identifizierens eines optimalen Lastaufnahmemittels aufweisen, wobei zusätzlich zu den oben genannten Kriterien ein Lastaufnahmemittel gewählt wird, welches eine maximale Transporteffizienz ermöglicht.

Dabei wird eine Auslastung der Förderstrecken, Auslastung von Förderstreckensegmenten, Auslastung der Pufferspeicher und/oder Auslastung der Endstellen berücksichtigt, um einen schnellen und reibungslosen Transport des Pakets zu erreichen und die Handhabungszeit zu minimieren.

Ferner kann nach dem Identifizieren überprüft werden, ob ein Fahrwagen mit dem geeigneten Lastmittel oder dem optimalen Lastmittel für das Transportieren des Pakets verfügbar ist. Sollte kein Fahrwagen mit dem geeigneten Lastmittel oder dem optimalen Lastmittel vorhanden sein, kann ein Fahrwagen mit dem geeigneten Lastmittel oder dem optimalen Lastmittel aus einem Pufferspeicher zum Einschleusbereich gesteuert werden. Alternativ kann in dem Pufferspeicher ein geeignetes Lastmittel oder das optimale Lastmittel an einem Fahrwagen montiert werden und anschließend der Fahrwagen zum Einschleusbereich gesteuert werden. Ferner kann ein ungeeignetes oder suboptimales Lastaufnahmemittel auf einem Fahrwagen gegen das geeignete Lastmittel oder das optimale Lastmittel getauscht werden. Dies erfolgt vorzugsweise automatisch in einer Pufferzone.

Darüber hinaus kann, wenn wegen einer Größe oder eines Gewichts oder einer Form des Pakets kein geeignetes Lastaufnahmemittel identifiziert werden kann, zumindest zwei Fahrwägen mit vorzugsweise identischen Lastaufnahmemitteln ausgewählt und miteinander verbunden werden, um einen Zug zu bilden, wobei der Zug in dem Einschleusbereich bereitgestellt wird und das Paket in die Lastaufnahmemittel des Zugs verladen wird.

Darüber hinaus kann das Verfahren dien Schritt aufweist: Feststellen einer falschen Paketsequenz, wobei das Paket vor oder nach einem zweiten Paket, welches mittels eines zweiten Fahrwagens auf der Förderstrecke transportiert wird, die Endstelle erreichen muss, und wobei, wenn eine falsche Paketsequenz festgestellt wird, der Fahrwagen veranlasst wird, den zweiten Fahrwagen auf der Förderstrecke zu überholen bzw. sich vom zweiten Fahrwagen überholen zu lassen.

Ferner kann das Erfassen bereits auf einer Zuförderstrecke erfolgen. Basierend auf dem geeigneten Lastaufnahmemittel kann ein Einschleusbereich des Sortiersystems aus einer Vielzahl von Einschleusbereichen des Sortiersystems ausgewählt werden, in welchem zumindest ein Laufwagen mit dem daran befestigten geeigneten Lastmittel bereitgestellt ist. Abschließend kann das Paket über die Zuförderstrecke zu dem ausgewählten Einschleusbereich transportiert werden.

Weitere Einzelheiten der Erfindung werden anhand der nachstehenden Figuren erläutert. Dabei zeigt
- Figur 1:: eine isometrische Ansicht erfindungsgemäßen Ausführungsform Sortiersystems mit modularen Schienensystems mit individuell ansteuerbaren modularen Fahrwägen;
- Figur 2:: eine Ausführungsform des Fahrwagens mit einem Lastaufnahmemittel für den hängenden Transport von Paketen;
- Figur 3:: eine Ausführungsform des Fahrwagens mit einem Lastaufnahmemittels für den stehenden Transport von Paketen in Form einer Schale;
- Figur 4:: eine Detailansicht eines Abschnitts des modularen Schienensystems mit daran befestigten Fahrwägen und unterschiedlichen Lastaufnahmemitteln;
- Figur 5:: eine Ausführungsform zweier Fahrwägen mit Crossbelt-Elementen welche zum Transport von großen Paketen einen Zug bilden;
- Figur 6:: eine Ausführungsform zweier Fahrwägen mit eine Transporttasche, welche zum Transport von großen Paketen einen Zug bilden;
- Figur 7:: eine Detailansicht eines Abschnitts des modularen Schienensystems mit mehreren Fahrwägen und unterschiedlichen Lastaufnahmemitteln auf einer modularen Schiene; und
- Figur 8:: eine Detailansicht eines Abschnitts des modularen Schienensystems, die eine Pufferzone sowie Weichen und Zusammenführungen aufweist.

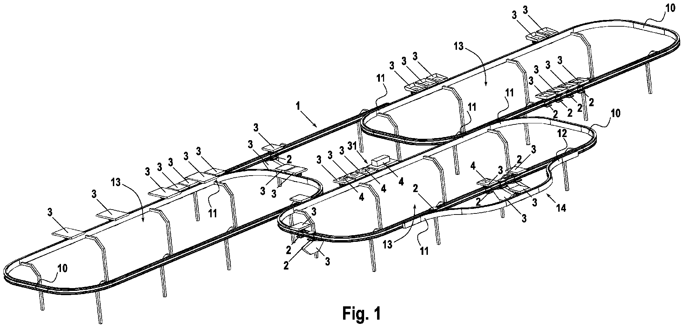

Figur 1 zeigt eine isometrische Ansicht einer erfindungsgemäßen Ausführungsform des Sortiersystems, das für den Einsatz in einem Logistikzentrum konzipiert ist. Das System umfasst eine Förderstrecke 1, die aus mehreren modularen Schienenabschnitten 10 besteht. Diese Schienenabschnitte sind so konfiguriert, dass sie eine Vielzahl von Fahrwägen 3 aufnehmen und führen können. Die Fahrwägen sind individuell ansteuerbar und können sich unabhängig voneinander entlang der gesamten Förderstrecke 1 bewegen.

Die Förderstrecke 1 ist in Form dreier geschlossener Ringe 13 ausgeführt, welche durch Weichen 11 und Zusammenführungen 12 miteinander verbunden sind. Diese Weichen 11 und Zusammenführungen 12 ermöglichen es, die Fahrwägen 2 entlang unterschiedlicher Routen auf unterschiedliche Streckenabschnitte zu leiten, wodurch eine flexible Anpassung an die jeweiligen Sortieranforderungen möglich ist. Die Weichen 11 sind so gestaltet, dass sie eine nahtlose Übergabe der Fahrwägen 2 zwischen verschiedenen Streckenabschnitten gewährleisten, insbesondere kann sich ein Fahrwagen 2 von einem jeden Ring 13 direkt auf eine der anderen Ringe 13 bewegen.

An einem Ende der Förderstrecke 1 ist eine Pufferzone 14 vorgesehen, die dazu eingerichtet ist, Fahrwagen 2 und/oder Pakete 4 zwischenzuspeichern. Diese Pufferzonen sind strategisch platziert, um Spitzenbelastungen im System auszugleichen und einen kontinuierlichen Betrieb zu gewährleisten.

Die Fahrwägen 2 sind mit unterschiedlichen Lastaufnahmemitteln 3 ausgestattet, die speziell für den Transport verschiedener Paketarten ausgelegt sind. In der Abbildung sind mehrere Fahrwägen 2 mit unterschiedlichen Lastaufnahmemitteln 3 dargestellt, die eine Anpassung an die Größe und Form der zu transportierenden Pakete erlauben. Diese Flexibilität in der Wahl der Lastaufnahmemittel ermöglicht eine effiziente Nutzung des Systems, da es auf die spezifischen Anforderungen der zu transportierenden Güter abgestimmt werden kann. Die Fahrwagen 2 weisen einen modularen Aufbau auf, wobei alle Fahrwägen 2 identisch ausgebildet sind und sich lediglich die an den Fahrwägen 2 befestigten Lastaufnahmemittel 3 unterscheiden. Denkbar ist jedoch, dass neben den dargestellten Fahrwägen 2 auch anders ausgebildete Fahrwägen 2 auf der Förderstrecke 11 bewegt werden. Dies bedeutet, dass die Grundstruktur und auch der Antrieb der Fahrwagen 2 einheitlich gestaltet sind.

Die Förderstrecke 1 ist modular aufgebaut, was eine einfache Erweiterung und Anpassung des Systems ermöglicht. Die Schienenmodule 10 sind in einem Rastermaß angeordnet, das eine flexible Anpassung an die räumlichen Gegebenheiten des Logistikzentrums erlaubt. Dies reduziert den Aufwand bei späteren Erweiterungen oder Anpassungen des Systems an veränderte Betriebsanforderungen. Die Länge der einzelnen Schienenmodule 10 entspricht einem Standardmaß und einem Vielfachen des Standardmaßes. Ferner weisen alle Schienenmodule 10 mit Kurvensegmenten eine Richtungsänderung in einem Winkelbereich von 90° auf. Die Schienen 10 sind als Monorail ausgeführt und über eine freistehende Rahmenkonstruktion am Boden des Logistikzentrums montiert.

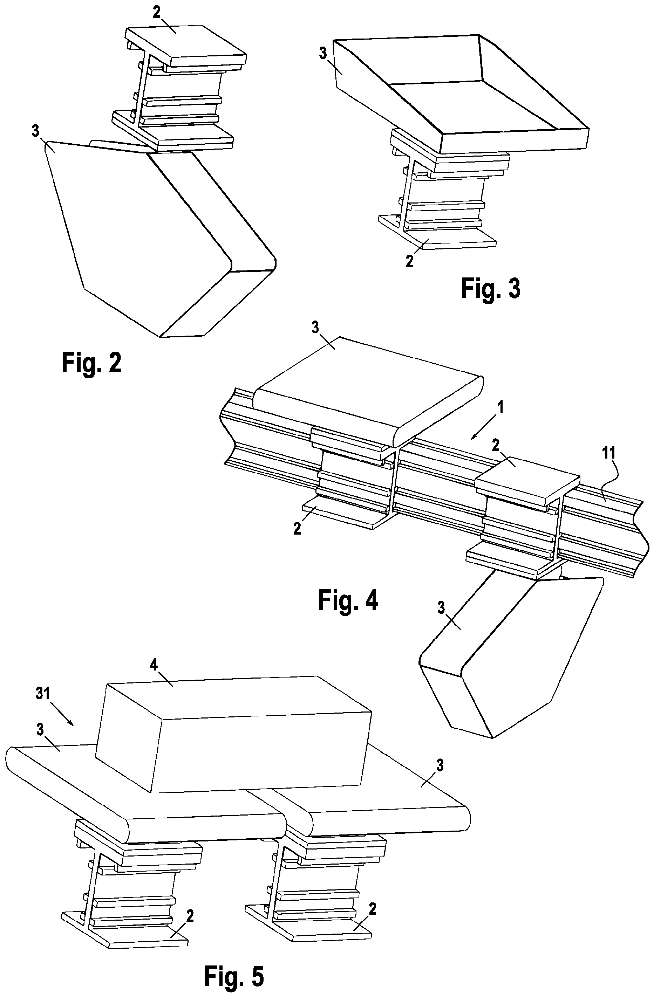

Insgesamt zeigt Figur 1 ein hochflexibles und anpassungsfähiges Sortiersystem, das durch den Einsatz individuell steuerbarer Fahrwagen 2 und modularer Schienenabschnitte 10 eine effiziente Handhabung einer Vielzahl von Paketarten ermöglicht. Weitere Einzelheiten des Sortiersystems werden in Detailansichten unterschiedlicher Aspekte des Sortiersystems in den Figuren 2 bis 8 illustriert.

Figur 2 zeigt eine schematische Darstellung eines Lastaufnahmemittels 3, das an einem Fahrwagen 2 befestigt ist. Das Lastaufnahmemittel 3 ist in dieser Ausführungsform als eine Transporttasche 3 konfiguriert, die für den hängenden Transport von kleinen Paketen und insbesondere Postsendungen geeignet ist. Die Transporttasche 3 weist eine Bodenklappe zum schwerkraftgetriebenen Ausgeben eines in der Transporttasche 3 transportierten Pakets auf. Die Transporttasche 3 weist ferner einen mechanischen Auslösemechanismus auf, welcher durch den Fahrwagen 2 ausgelöst werden kann, wenn ein Endziel oder eine Pufferzone 14 erreicht ist. Der Fahrwagen 2 ist in Bezug zu einer Ebene parallel zur Transportrichtung auf der Förderstrecke 1 symmetrisch ausgeführt. Der Fahrwagen 3 weist eine erste Montagefläche und eine zweite Montagefläche zur Befestigung eines Lastaufnahmemittels 4 auf. Die erste Montagefläche und zweite Montagefläche sind horizontal ausgebildet und über eine vertikale Grundstruktur verbunden. Die erste Montagefläche sowie die vertikale Grundstruktur weisen Vorsprünge auf, welche dazu ausgebildet sind, in die Führungsnuten der Schiene 10 einzugreifen, um die Fahrwagen 2 sicher an der Schiene zu führen. Durch die symmetrische Form des Fahrwagens 2 kann der Fahrwagen 2 an der in der Transportrichtung linken Seite sowie an der in der Transportrichtung rechten Seite des Fahrwagens 2 an eine Schiene 10 angesetzt und geführt werden. Alternativ sind auch andere Formen der Schiene 10 denkbar, beispielsweise kann ein Querschnitt der Schiene 10 anstatt der in der Ausführungsform dargestellten Doppel-T-Profil ein Rundrohr-Profil oder ein U-Profil aufweisen.

Figur 3 veranschaulicht einen weiteren in der Förderstrecke 1 bewegbaren Fahrwagen 2 mit einem weiteren Lastaufnahmemittel 3. In dieser Ausführungsform handelt es sich bei dem Lastaufnahmemittel 3 um eine Kippschale, die für den stehenden Transport von Paketen ausgelegt ist. Die Kippschale 3 ist so gestaltet, dass sie Pakete 4 sicher aufnehmen und transportieren kann. Die Kippschale 3 kann eine Vielzahl von Paketen 4 unterschiedlicher Größe, Form und Gewicht aufnehmen und präzise ein Paket 4 durch eine Kippbewegung in einen richtigen Zielbehälter in einer Endstelle befördern. Damit ergänzt der Fahrwagen 2 den in der Figur 2 gezeigten Fahrwagen 2 nicht nur hinsichtlich der transportierbaren Größe, Form und des Gewichts der Pakete 4, sondern ebenfalls in Bezug auf die Art der Entladung und Zwischenspeicherung der Pakete 4 in einer Endstelle.

Figur 4 zeigt eine detaillierte Ansicht eines Abschnitts der Förderstrecke 1 mit mehreren Fahrwägen 2, die entlang der Schiene 10 bewegt werden. Ähnlich wie in Abbildung 1 ist ein Fahrwagen 2 mit einem Lastaufnahmemittel 3 in Form einer Transporttasche ausgestattet, während ein anderer Fahrwagen 2 mit einem Lastaufnahmemittel 3 in Form einer Crossbelt-Einheit ausgestattet ist. Wie in der Figur 2 zu erkennen ist, sind die Fahrwägen 2 derart ausgebildet, eine Unterseite und eine Oberseite der Schiene 10 zu umgreifen. Eine alternative Gestaltung der Fahrwägen 2 und der Schiene 10 sind denkbar. Ferner weisen die Schienen 10 an der Oberseite und an einer Seitenwand Führungsnuten auf, in welche die Vorsprünge der Fahrwagens 2 führbar sind. Figur 4 unterstreicht den Vorteil der erfindungsgemäßen Sortieranlage gegenüber den Sortiersystemen aus dem Stand der Technik. In bekannten Sortieranlagen werden Fahrwägen mit unterschiedlichen Lastaufnahmemitteln getrennt auf separaten Förderstrecken bewegt. Wie in der Figur 2 gezeigt ist, können in dem Sortiersystem die Fahrwägen 2, an welchen jeweils unterschiedliche Lastaufnahmemittel 3 befestigt sind, auf der gleichen Schiene 10 bewegt werden.

Figur 5 zeigt eine weitere Ausführungsform, bei der zwei Fahrwägen 2 miteinander verbunden sind, um einen Zug 31 zu bilden. An jedem Fahrwagen 2 ist ein Lastaufnahmemittel 3 in Form einer Crossbelt-Einheit befestigt, welche zusammenwirken, um in der Anordnung als Zug 31 eine gemeinsame Transportebene für das 4 Paket zu bilden. Diese Konfiguration ermöglicht den Transport eines großen Pakets 4, das auf den Crossbelt-Einheiten 3 sicher abgelegt ist. Die Crossbelt-Einheiten sind so konzipiert, dass sie das Paket während des Transports stabil halten und eine präzise Sortierung ermöglichen. Die Fahrwägen 2 können sich selbständig zu dem in der Figur 5 dargestellten Zug 31 verbinden und selbstständig wieder lösen. In der gezeigten Ausführungsform wird der Zug 31 "virtuell" gebildet, das heißt, dass keine mechanische Verbindung zwischen den beiden Fahrwägen 2 besteht, sondern eine koordinierte Bewegung des Zugs 31 auf der Förderstrecke 1 ausschließlich durch die Steuerung der Antriebe der Fahrwägen 2 erreicht wird. Denkbar ist, bei besonders großen Paketen 4 oder Sperrgut, weitere Fahrwägen mit den Crossbelt-Einheiten 3 in den Zug 31 zu integrieren.

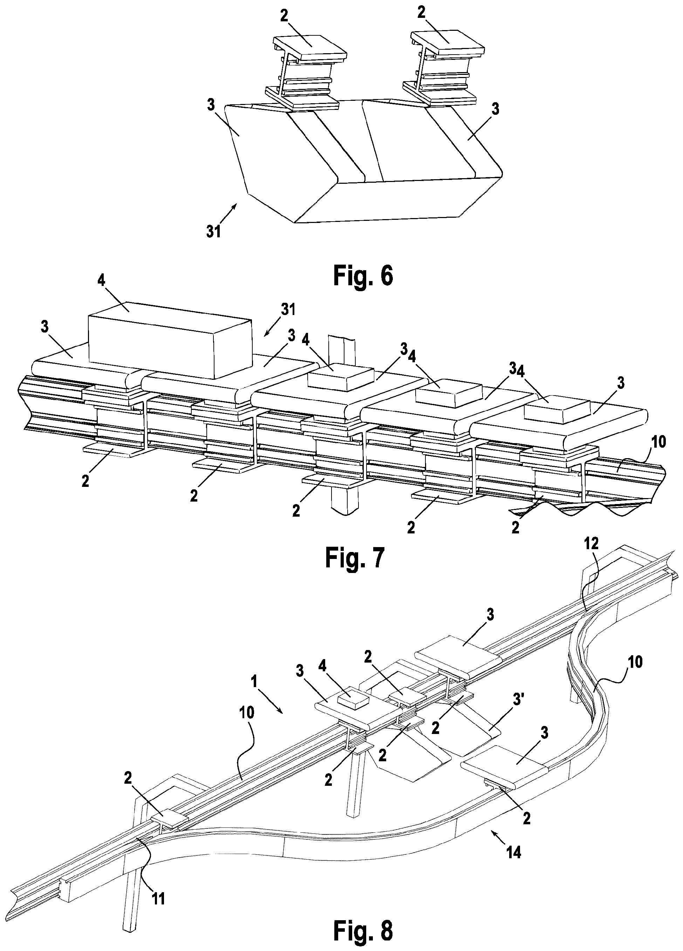

Figur 6 zeigt eine perspektivische Ansicht einer zweiten Alternative eines Zugs 31, wobei die Fahrwägen 2 Lastaufnahmemittel 3 für den hängenden Transport von Paketen aufweisen. In der dargestellten Ausführungsform ist an den zwei Fahrwägen 2 eine Transporttasche 3 befestigt. Denkbar ist jedoch auch, dass ein Zug 31 Fahrwägen mit daran befestigten Haken, Greifern, Hebebändern oder Hängegurten oder eine Mischung dieser Lastaufnahmemittel 3 aufweist.

In Figur 7 wird ein Abschnitt des Sortiersystems dargestellt, in dem mehrere Fahrwägen 2 entlang einer modularen Schiene 10 angeordnet und bewegbar sind. Die Fahrwagen 2 sind mit Lastaufnahmemitteln 3 ausgestattet, welche als Crossbelt-Einheiten ausgeführt sind. Dieser Abschnitt unterstreicht die Flexibilität in der Handhabung unterschiedlicher Paketgrößen. So sind sowohl die Fahrwägen 2 als auch die darauf befestigten Lastaufnahmemittel 3 identisch, durch die Bildung eines Zuges 31, welche durch die auf der linken Seite angeordneten Fahrwägen 2 erfolgt, können jedoch mit den identischen Komponenten sowohl kleine Pakete 4 als auch sehr große Pakete 4 auf der gleichen Förderstrecke 1 transportiert werden.

Figur 8 illustriert eine Pufferzone 14 des Sortiersystems 14. Die Pufferzone 14 ist mit einer Weiche 11 und einer Zusammenführung 12 an einen Ring des Sortiersystems angebunden. In der Pufferzone ist ein Fahrwagen 1 mit einer darauf befestigten Crossbelt-Einheit 3 angeordnet. Die Pufferzone 14 ist dazu ausgebildet, den Fahrwagen und das Lastaufnahmemittel aus der Förderstrecke 1 temporär zu entnehmen, zwischenzuspeichern und wieder in die Förderstrecke 1 einzuspeisen. Die Pufferzone 14 stellt eine wesentliche Komponente dar, um die Effizienz und Flexibilität des Sortiersystems zu erhöhen. In der Pufferzone 14 kann eine automatische Montage oder Demontage der Lastaufnahmemittel 3 eingerichtet sein. Beispielsweise kann, wenn ein verändertes Paketaufkommen in einem Einschleusbereich 15 des Sortiersystems 14 entsprechend verlangt wird, die Crossbelt-Einheit 3 des Fahrwagens 2 in der Pufferzone 14 demontiert werden und durch eine Kippschale 3 ersetzt werden. Die Crossbelt-Einheit 3 kann dann in der Pufferzone 14 zwischengelagert werden, bis ein abermals verändertes Paketaufkommen die Montage einer entsprechenden Lastaufnahmemittelform verlangt. Hierdurch kann die Pufferzone 14 als Lager für Lastaufnahmemittel 3 fungieren. Alternativ kann der Fahrwagen 2 in der Pufferzone 14 beispielsweise um ein zweites Lastaufnahmemittel 3' ergänzt werden, um den Durchsatz auf der Förderstrecke 1 zu erhöhen. Hierzu wird in der Pufferzone 14 an die zweite Montageebene des Fahrwagens 3 eine Transporttasche 3' befestigt. Eine entsprechende Konfiguration aus Fahrwagen 2 mit einem als Crossbelt-Einheit aufgeführten Lastaufnahmemittel 3 und einem als Transporttasche ausgeführten zweiten Lastaufnahmemittel 3' ist zusammen mit weiteren Fahrwägen 3 auf der Schiene 10 des Rings 13 angeordnet.

### Bezugszeichenliste

- 1: Förderstrecke
- 2: Fahrwagen
- 3: Lastaufnahmemittel
- 3': Zweites Lastaufnahmemittel
- 4: Paket
- 10: Schiene
- 11: Weiche
- 12: Zusammenführung
- 13: Ring
- 14: Pufferzone

- 31: Zug

## Patentansprüche

1. Sortiersystem für ein Logistikzentrum,
welches ein Förderstrecke (1) und eine Vielzahl von Fahrwägen (2) aufweist,
wobei jeder Fahrwagen (2) einen eigenen Antrieb aufweist, mit welchem der Fahrwagen (2) individuell auf der gesamten Förderstrecke (1) bewegbar ist,
wobei an den Fahrwägen (2) jeweils ein Lastaufnahmemittel (3) zur Aufnahme und Transport von Paketen (4) befestigt ist und wobei die Lastaufnahmemittel (3) aus mindestens zwei unterschiedlichen Lastaufnahmemittelformen ausgewählt sind.

2. Sortiersystem nach Anspruch 1, wobei die Fahrwägen (2) einen modularen Aufbau aufweisen, wobei die Fahrwägen (2) identisch ausgebildet sind und sich die an den Fahrwägen (2) befestigten Lastaufnahmemittel (3) unterscheiden.

3. Sortiersystem nach einem der vorangegangenen Ansprüche, wobei eine Lastaufnahmemittelform ein Lastaufnahmemittel (3) für den stehenden Transport von Paketen (4), vorzugsweise eine Crossbelt-Einheit (3), eine Schale (3), eine Kippschale (3) oder ein Container ist.

4. Sortiersystem nach einem der Ansprüche 1 oder 2, wobei eine Lastaufnahmemittelform ein Lastaufnahmemittel (3) für den hängenden Transport von Paketen (4), vorzugsweise eine Transporttasche (3,3') ist.

5. Sortiersystem nach einem der vorangegangenen Ansprüche, wobei an zumindest einem Fahrwagen (2) ein zweites Lastaufnahmemittel (3') befestigt ist und wobei das Lastaufnahmemittel (3) vorzugsweise ein Lastaufnahmemittel (3) für den stehenden Transport von Paketen (4) ist und das zweite Lastaufnahmemittel (3') vorzugsweise ein Lastaufnahmemittel (3) für den hängenden Transport von Paketen (4) ist.

6. Sortiersystem nach einem der vorangegangenen Ansprüche, wobei der Antrieb eingerichtet ist, den Fahrwagen (2) selbst angetrieben auf der Förderstrecke (1) zu bewegen.

7. Sortiersystem nach einem der vorangegangenen Ansprüche, wobei der Antrieb ein Linearantrieb oder ein Reibungsantrieb ist.

8. Sortiersystem nach einem der vorangegangenen Ansprüche, wobei die Fahrwägen (2) dazu ausgebildet sind, einen Zug (31) bestehend aus zumindest zwei Fahrwägen (2) zu bilden und/oder sich aus dem Zug (31) zu lösen, wodurch ein einzelnes Paket in einer Vielzahl der Lastaufnahmemittel (3) der zumindest zwei Fahrwägen (2) des Zugs (31) aufnehmbar und transportierbar ist.

9. Sortiersystem nach einem der vorangegangenen Ansprüche, welches einen modularen Schienenaufbau aufweist, wobei die Förderstrecke (1) Schienen (10) aus vorgefertigten Modulen aufweist.

10. Sortiersystem nach Anspruch 9, wobei die Schienen (10) ein Rastermaß aufweisen, wobei eine Länge, Höhe, Breite und/oder Krümmung der Schienen (10) einem Standardmaß oder einem Vielfachen Ganzen dieses Standardmaßes entspricht.

11. Sortiersystem nach einem der vorangegangenen Ansprüche, wobei die Förderstrecke Weichen und/oder Zusammenführungen aufweist.

12. Sortiersystem nach Anspruch 11, wobei die Förderschrecke einen geschlossenen Ring, vorzugsweise eine Vielzahl geschlossener Ringe (13), aufweist, welche über Weichen und/oder Zusammenführungen miteinander verbunden sind.

13. Sortiersystem nach einem der vorangegangenen Ansprüche, welches einen Einschleusbereich (15) aufweist, in welcher ein Paket (4) in das Sortiersystem einspeisbar ist und wobei das Sortiersystem dazu konfiguriert ist, Größe, Form, Art und/oder Gewicht des Pakets (4) automatisch zu erfassen, vorzugsweise mittels einer Sensorvorrichtung, besonders bevorzugt mittels eines Kamerasystems.

14. Sortiersystem nach einem der vorangegangenen Ansprüche, welches eine Pufferzone (14) aufweist, welche dazu ausgebildet ist, Pakete (4) und/oder Fahrwägen (2) und/oder Lastaufnahmemittel (3) aus der Förderstrecke (1) zu entnehmen, zwischenzuspeichern und wieder in die Förderstrecke (1) einzuspeisen.

15. Sortierverfahren für den Transport eines Pakets (4) in einem Logistikzentrum, umfassend die Schritte:
- Erfassen einer Größe, einer Form, einer Art und/oder eines Gewichts des Pakets (4) in einem Einschleusbereich eines Sortiersystems oder in einer Zuförderstrecke zum Einschleusbereich;
- Basierend auf der erfassten Größe, der Form, der Art und/oder des Gewichts des Pakets (4), Identifizieren eines für einen Transport des Pakets (4) geeignetes Lastaufnahmemittel (3) aus mindestens zwei unterschiedlichen Lastaufnahmemittelformen;
- Bereitstellen eines Fahrwagens (2) in dem Einschleusbereich, an welchem das für einen Transport des Pakets (4) geeignete Lastaufnahmemittel (3) befestigt ist;
- Verladen des Pakets (4) in das an dem Fahrwagen (2) befestigte, für einen Transport des Pakets (4) geeignete Lastaufnahmemittel (3); und
- Transportieren des Fahrwagens (2) mittels eines eigenen Antriebs des Fahrwagens (2) auf einer Förderstrecke (1) des Sortiersystems zu einer Endstelle innerhalb des Sortiersystems.
